# EUROPEAN PATENT SPECIFICATION

(11) **EP 2 256 090 B1**
(45) Date of publication and mention of the grant of the patent: **24.08.2016**
(21) Application number: 09721859.8
(22) Date of filing: 17.03.2009
(51) Int. Cl.: C02F 1/52, B01D 61/14, C02F 1/44, C02F 1/78

(54) **PROCESS FOR PRODUCING RECYCLED WATER**
VERFAHREN ZUR HERSTELLUNG VON WIEDERAUFBEREITETEM WASSER
PROCÉDÉ DE PRODUCTION D'EAU RECYCLÉE

(30) Priority: 21.03.2008 JP 2008073186
(43) Date of publication of application: 01.12.2010
(73) Proprietor: Metawater Co., Ltd., Tokyo 101-0041 (JP)
(72) Inventor: NOGUCHI, Motoharu, Tokyo 105-6029 (JP); KOZONO, Hideki, Tokyo 105-6029 (JP)
(74) Representative: TBK
(86) International application number: PCT/JP2009/055125
(87) International publication number: WO 2009/116514

(56) References cited:
- WO-A1-2006/031998
- WO-A1-2008/015939
- JP-A- 11 239 789
- JP-A- 2000 061 208
- JP-A- 2002 079 062
- JP-A- 2002 126 480
- JP-A- 2002 153 886
- JP-A- 2005 125 152
- JP-A- 2006 255 688
- JP-A- 2007 014 955
- JP-A- 2007 185 610
- US-A1- 2002 104 787

## Description

### Technical Field

The present invention relates to a process for producing reclaimed water using treated sewage and other wastewater as raw water.

### Background Art

Wastewater such as treated sewage discharged from a municipal wastewater treatment plant is generally released into a river or the like. A process for subjecting the wastewater to recycling treatment to produce reclaimed water has been developed from recent requirement on water resource reservation. Since the wastewater contains organic matters in most cases, the organic matters are generally decomposed by strong oxidizability of ozone to be injected. Since the wastewater contains a solid matter, the solid matter is generally filtered by using a separation membrane to obtain the reclaimed water.

For example, Patent Document 1 discloses a process for subjecting treated sewage to preozone treatment in a low ozone injecting rate, thereafter subjecting the treated sewage to biological filtration, and thereafter subjecting the treated sewage to membrane filtering treatment in a high ozone injecting rate to produce reclaimed water. Thus, when the ozone treatment is combined with the membrane filtering treatment, a fouling substance deposited on a membrane surface is oxidized and decomposed by ozone, and thereby a foul prevention effect of the membrane surface can be obtained.

However, the conventional process for producing the reclaimed water using the ozone requires a large amount of ozone. For example, in Patent Document 1, in the case of the low ozone injecting rate, the ozone of 1 to 1.5 mg/L is injected. In the case of high ozone injecting rate, the ozone of 15 mg/L is injected. An ozone generator itself is expensive and consumes a large amount of power, resulting in a high running cost. Therefore, it is difficult to industrially carry out the conventional process requiring the large amount of ozone.

Thus, if a large amount of ozone is used in such a manner, the organic matters in the raw water are decomposed too excessively to be blocked by the membrane surface. As a result, the decomposed organic matters move into treated water. Therefore, there was also another problem that the concentration of the organic matters in the treated water increases and the quality of the treated water deteriorates.

Then, the present inventor has developed a process for not decomposing the organic matters using the oxidizability of ozone, but adding a small amount of ozone into raw water to change the surface properties of the solid matters to enhance coagulability, and coagulating and membrane-filtering the solid matters. Patent applied for the process. In this technique, the amount of the ozone to be injected was controlled so that a residual ozone concentration in the raw water before coagulation was kept within a range from 0.01 to 1.0 mg/L. Since good flocs are formed by the improvement of the coagulability, the fouling of the membrane surface can be effectively suppressed.

However, when the quality of the raw water deteriorates, the added ozone is consumed by the decomposition of the organic matters. Unless a large amount of ozone is added, the residual ozone concentration before coagulation is decreased. In this case, the coagulation improving effect is decreased to increase a trance membrane pressure, and thereby the foul prevention effect of the membrane surface may be lost. A large-volume ozone generator must be installed in order to deal with such a situation. In addition, since it is only necessary to add a tiny amount of ozone when the quality of the raw water is good, only a part of capacity of the large-volume ozone generator is used, and the ozone generator becomes an excessive facility.

### Prior Art Document

Patent Document 1: Japanese Patent Application Laid-Open No. 2002-136981

### Disclosure of the Invention

### Problem to be solved by the Invention

Therefore, it is an object of the present invention to provide a process capable of inexpensively producing reclaimed water having excellent quality from wastewater while suppressing the fouling of a membrane surface without using a large amount of ozone.

### Means for Solving Problem

The present invention that addresses the forgoing problems is a process for producing reclaimed water by means of bringing ozone into contact with raw water to enhance coagulability of a solid matter contained in the raw water; injecting a coagulant into the raw water to coagulate the solid matter; and membrane-filtering the coagulated solid matter, and is characterized in that a residual ozone concentration (dissolved ozone concentration) in the raw water before a separation membrane (between an outlet of an ozone contact column and an inlet of the separation membrane) is measured; ozone is injected from an ozone generator so that the residual ozone concentration in the raw water before the separation membrane is in a given range; and an amount of the coagulant to be injected is increased when an ozone demand exceeds capacity of an ozone generator due to deterioration in quality of the raw water and the residual ozone concentration falls below a given value. In a region where the ozone demand does not exceed the capacity of the ozone generator, an amount of the coagulant to be added can be increased or decreased according to an amount of the ozone to be introduced or an amount of the ozone to be consumed. The amount of the ozone to be consumed is calculated from a concentration of the ozone to be introduced, a waste ozone concentration, an ozone gas flow rate and a flow rate of liquid to be treated. If the ozone gas flow rate and the flow rate of the liquid to be treated are kept almost constant, this calculation can be omitted. Furthermore, the residual ozone concentration is desirably measured before coagulation in view of the solid matter easily coagulated by the ozone.

The present invention is particularly effective when the raw water is wastewater containing organic matters. In the present invention, the amount of the ozone to be injected is preferably set so that the residual ozone concentration in the raw water before the separation membrane is within a range from 0.01 to 2.0 mg/L, and more preferably from 0.3 to 1.0 mg/L. PACl, aluminum sulfate, ferric chloride or PSI can be used as the coagulant. Membrane-filtration is carried out using an MF membrane or a UF membrane.

### Advantage of the Invention

In the present invention, the ozone is brought into contact with the raw water to enhance the coagulability of the solid matter in the raw water. Then, the coagulant is injected into the raw water to coagulate the solid matter, and the solid matter is membrane-filtered. The residual ozone concentration in the raw water before the separation membrane is measured. The amount of the coagulant to be injected is increased when quality of the raw water deteriorates and this results in the ozone demand exceeding capacity of the ozone generator and hence in the residual ozone concentration lower than the given value. That is, in the present invention, the reduction of the residual ozone concentration in the raw water before the separation membrane is eliminated not by increasing the amount of the ozone to be added, but by increasing the amount of the coagulant to be injected, which is far less costly than adding the ozone. That is to say, the reduction of the coagulation improving effect generated by the reduction of the residual ozone concentration is covered with the amount of the coagulant to prevent the fouling of the membrane surface.

This eliminates the large-volume ozone generator, resulting in cost saving. In addition, since excessive ozone is not injected, it does not happen that the organic matters in the raw water are decomposed too excessively to be blocked by the membrane surface. As a result, the organic matters do not move into treated water. Also, the deterioration of the quality of the treated water is not caused. Even in the present invention, the residual ozone concentration in the raw water before the separation membrane is preferably kept within a range from 0.01 to 2.0 mg/L, and more preferably from 0.3 to 1.0 mg/L. When the residual ozone concentration is lower than this range, the coagulation improving effect is insufficient. The residual ozone concentration exceeding this range results in higher cost.

The excessive addition of the coagulant can be prevented to achieve further reduction of a running cost by increasing or reducing the amount of the coagulant to be added according to the amount of the ozone to be introduced or the amount of the ozone to be consumed in the region where the ozone demand does not exceed the capacity of the ozone generator. However, even when the quality of the raw water is good, the residual ozone concentration in the raw water before the separation membrane is high, and the ozone demand may be very small, it is not preferable that the amount of the coagulant to be added is set to zero. It is because flocs are not formed if the coagulant is not added at all, and a small amount of fine solid contained in the object treated water may foul the membrane surface.

### Brief Description of the Drawings

FIG. 1 is a block diagram showing an embodiment of the present invention.
FIG. 2 is a graph showing an amount of a coagulant to be injected in a region where an ozone demand exceeds the capacity of an ozone generator.
FIG. 3 is a graph showing an amount of a coagulant to be injected in a region where the ozone demand does not exceed the capacity of the ozone generator.

### Description of Reference Numerals

- 1:: final sedimentation tank
- 2:: ozone contact column
- 3:: ozone generator
- 4:: coagulation tank
- 5:: dissolved-ozone meter
- 6:: coagulant-injecting pump
- 7:: coagulant storage tank
- 8:: separation membrane

### Best Mode for Carrying Out the Invention

Hereinafter, a preferred embodiment of the present invention will be described.

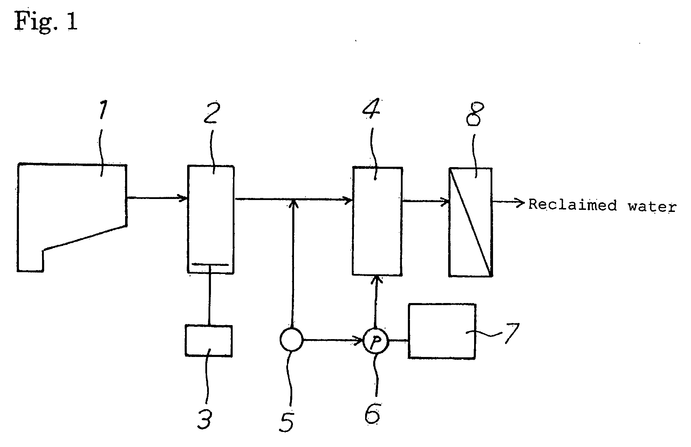

Typical examples of raw water in the present invention include treated sewage. The other examples of the raw water include sidestreams, industrial wastewater, night soil, agricultural wastewater, live-stock wastewater, aquaculture wastewater and clean water. In the embodiment shown in FIG. 1, reclaimed water is produced by using treated sewage discharged from a final sedimentation tank 1 of a municipal wastewater treatment plant as raw water.

The raw water is brought into contact with ozone injected from an ozone generator 3 in an ozone contact column 2. Means for bringing the raw water into contact with the ozone is not particularly limited in the present invention, and may either be an upward flow type or a downward flow type. The means may also use a process for jetting out the ozone from an air diffuser plate, or a process for blowing the ozone as fine bubbles (microbubbles and nanobubbles) using an ejector. A coagulation improving effect of a solid matter in the raw water by the ozone is carried out in a very short time. The mechanism of the coagulation improving effect by the ozone is not completely resolved scientifically. However, it is guessed that the oxidizability of the ozone changes the surface charge of the solid matter, and the solid matter has plus electric charge easily coagulated.

The raw water having the solid matter having the coagulability increased by bringing the raw water into contact with the ozone is sent to a coagulation tank 4. Residual ozone concentration of the raw water before a separation membrane is measured by a dissolved-ozone meter 5. In this embodiment, the measuring place of the residual ozone concentration is before the coagulation tank 4. In the present invention, the ozone is injected from the ozone generator so that the residual ozone concentration measured herein is in a given range. The amount of the ozone to be injected by the ozone generator 3 is set so that it can be kept within a range preferably from 0.01 to 2.0 mg/L, and more preferably from 0.3 to 1.0 mg/L. This range is provided since the amount of the ozone to be consumed is changed and the residual ozone concentration also fluctuates according to the quality of the inflow raw water. When the raw water is secondary effluent of municipal wastewater treatment plant, in order to obtain the above-mentioned residual ozone concentration, the ozone of about 4 to 10 mg/L is injected into the raw water. If the quality of the raw water is good when the amount of the ozone to be injected is set constant, the consumption of the ozone is small. Thereby, the residual ozone concentration in the raw water before the separation membrane is increased. If the quality of the raw water deteriorates, a large amount of ozone is consumed. Thereby, the residual ozone concentration in the raw water before the separation membrane is decreased.

A coagulant is injected into the coagulation tank 4 from a coagulant storage tank 7 by a coagulant-injecting pump 6. In the present invention, when the residual ozone concentration in the raw water before the separation membrane measured by the dissolved-ozone meter 5 is lower than a given value, the amount of the coagulant to be injected is increased. That is, when the quality of the raw water deteriorates and this results in an ozone demand exceeding capacity of the ozone generator and hence in the residual ozone concentration lower than a given value, the amount of the coagulant to be injected is increased. For example, when the residual ozone concentration in the raw water before the separation membrane is set to 0.5 mg/L, and the measured value of the dissolved-ozone meter 5 is lower than 0.5 mg/L, the amount of the coagulant to be injected is increased.

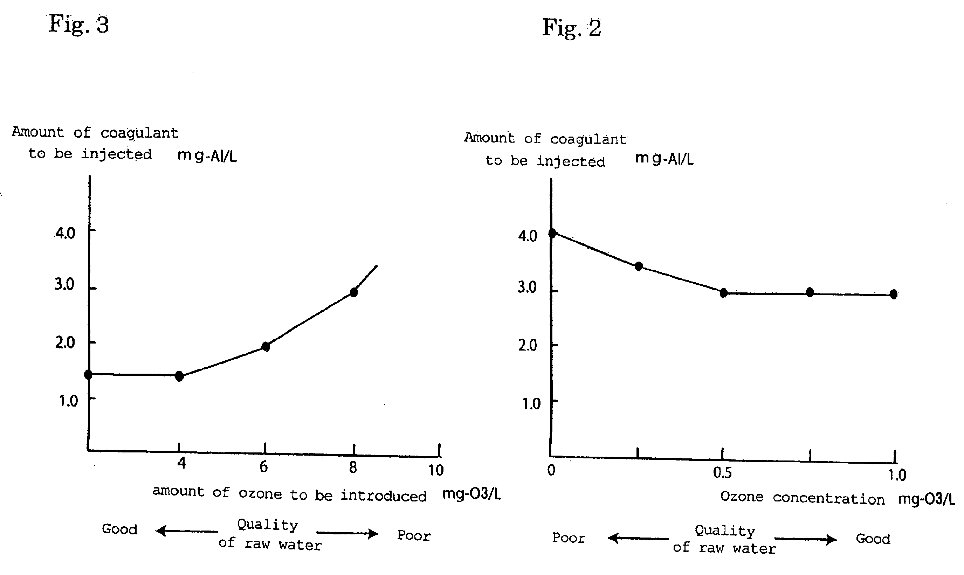

The degree of a change in the amount of the coagulant to be injected according to change in the residual ozone concentration should be determined according to the quality of the raw water and the kind of the coagulant. PACl, aluminum sulfate, ferric chloride or PSI can be used as the coagulant. For example, when the raw water is the treated sewage and PACl is used as the coagulant, as shown in a graph of FIG. 2, the amount of PACl to be injected may be increased by 0.2 mg-Al/L with each reduction in the residual ozone concentration in the raw water before the separation membrane by 0.1 mg/L from 0.5 mg/L. Naturally, the increase of the amount of the coagulant to be introduced results in higher cost. However, the cost increase related to the amount of the coagulant to be introduced is significantly lower than the cost increase related to the amount of the ozone to be injected.

Thus, when a controlled amount of coagulant is injected into the raw water having coagulability improved by the ozone, the solid matter in the raw water is promptly coagulated to form flocs. When the quality of the raw water deteriorates and the amount of the ozone to be consumed is increased to decrease the residual ozone concentration in the raw water before the separation membrane, a larger amount of coagulants are injected to form good flocs after all. Then, membrane-filtration is carried by a separation membrane 8, and filtered water is taken out as reclaimed water.

An MF membrane or a UF membrane can be used as the separation membrane 8. Since good flocs are formed in the preliminary step, a membrane surface is not fouled. Since excessive ozone is not injected as with the conventional technique, it does not happen that the organic matters in the raw water are decomposed too excessively to be blocked by the membrane surface. As a result, the organic matters do not move into treated water. Therefore, the quality of the treated water does not deteriorate. The material of the membrane may be a polymer or a ceramic. The membrane is optionally one of a monolith type membrane, a tubular type membrane, a honeycomb type membrane, a hollow fiber type membrane and a flat type membrane. In this embodiment, a monolith type ceramic membrane manufactured by the applicant's company was used.

The membrane surface can be prevented from fouling without being provided with a particular means in the region where the ozone demand does not exceed the capacity of the ozone generator. It was found that the continuous addition of a fixed amount of a coagulant even when the quality of the raw water is improved may cause a useless coagulant, and the excessive coagulant may notably foul the membrane surface. Therefore, as described in claim 2, it is preferable that the amount of the coagulant to be added is increased or decreased according to the amount of the ozone to be introduced or the amount of the ozone to be consumed in the region where the ozone demand does not exceed the capacity of the ozone generator.

That is, if the quality of the raw water deteriorates in the region where the ozone demand does not exceed the capacity of the ozone generator, the ozone demand is increased. On the other hand, if the quality of the raw water is improved, the ozone demand is decreased. Then, as shown in a graph of FIG. 3, when the amount of the ozone to be introduced or the amount of the ozone to be consumed is increased, the amount of the coagulant to be added is increased. When the amount of the ozone to be introduced or the amount of the ozone to be consumed is decreased, the amount of the coagulant to be added is decreased. Such operation can reduce the amount of the coagulant to be used when the quality of the raw water is improved, and can achieve the reduction of a running cost.

Since object materials to be coagulated are insufficient in the conventional process where the amount of the coagulant to be used is set constant even when the quality of the raw water is improved, the excessive coagulant may directly reach the membrane surface to notably foul the membrane surface. As described above, this problem can be solved by decreasing the amount of the coagulant to be added when the amount of the ozone to be introduced or the amount of the ozone to be consumed is decreased. As shown in FIG. 3, even when the amount of the coagulant to be added is decreased, the amount of the coagulant to be added is not set to zero, and a certain fixed amount of the coagulant is preferably secured. This is because a small amount of fine solid contained in the object treated water may foul the membrane surface when the coagulant is not added at all.

As described above, the present invention can inexpensively produce reclaimed water having excellent quality from wastewater while preventing the fouling of the membrane surface without using a large amount of ozone. Hereinafter, examples thereof will be described.

### Examples

### (Example of Claim 1 of the Present Invention)

Secondary effluent discharged from a municipal wastewater treatment plant was used as raw water. reclaimed water was produced using an apparatus shown in FIG. 1. An amount of ozone to be injected was set to 6 to 10 mg/L so that a residual ozone concentration in the raw water before coagulation was within a range from 0.3 to 1.0 mg/L. PACl was used as a coagulant. The amount of PACl to be injected was increased by 0.2 mg-Al/L with each reduction in the residual ozone concentration in the raw water before coagulation by 0.1 mg/L from 0.5 mg/L. On the other hand, when the residual ozone concentration was 0.5 mg/L or more, the amount of PACl to be injected was set constant at 3.0 mg-Al/L. The qualities of the raw water and reclaimed water at that time were shown in Table 1. The quality of reclaimed water when the amount of PACl to be injected was not changed even if the residual ozone concentration in the raw water before coagulation was changed was shown in Table 2 as a comparative example.

**[Table 1]**

| | | Quality of raw water | Treated water | (reclaimed water) | |
|---|---|---|---|---|---|
| | | | Example 1 | Example 2 | Example 3 |
| Quality | SS (mg/L) | 0-4 | 1> | 1> | 1> |
| | BOD (mg/L) | 2-6 | 1-2 | 1-2 | 1-2 |
| | Color(unit) | 13-25 | 1-3 | 1-3 | 1-3 |
| Dissolved ozone concentration (mg-Q₃/L) | | - | 0.3 | 0.5 | 1.0 |
| Amount of PACl to be injected (mg-Al/L) | | - | 3.4 | 3 | 3 |
| Interval for chemical cleaning (day) | | - | 90 | 90 | 90 |

**[Table 2]**

| | | Quality of raw water | Treated water | (reclaimed water) | |
|---|---|---|---|---|---|
| | | | Comparative Example 1 | Comparative Example 2 | Comparative Example 3 |
| Quality | SS (mg/L) | 0-4 | 1> | 1> | 1> |
| | BOD (mg/L) | 2-6 | 1-2 | 1-2 | 1-2 |
| | Color(unit) | 13-25 | 1-3 | 1-3 | 1-3 |
| Dissolved ozone concentration (mg-O₃/L) | | - | 0.3 | 0.5 | 1.0 |
| Amount of PACl to be injected (mg-Al/L) | | - | 3 | 3 | 3 |
| Interval for chemical cleaning (day) | | - | 60 | 90 | 90 |

Tables 1, 2 are compared. Even if an amount of PACl to be injected was not changed in accordance with a dissolved ozone concentration, the water quality was almost the same. On the other hand, interval for chemical cleaning showing whether the membrane-filtration was stably carried out will be described below. When the amount of PACl to be injected was changed in accordance with the dissolved ozone concentration (Table 1), the interval for chemical cleaning was predicted to be 90 days in any dissolved ozone concentration. However, when the amount of PACl to be injected was not changed in accordance with the dissolved ozone concentration (Table 2), the interval for chemical cleaning was 90 days when the dissolved ozone concentration was high, and the membrane-filtration could be stably operated. However, the interval for chemical cleaning was reduced to 60 days when the dissolved ozone concentration was low, and the membrane-filtration was slightly hard to be stably operated. The interval for chemical cleaning throughout the whole period was reduced to 70 days. Therefore, the increase of the amount of the coagulant to be injected is found to be effective when the dissolved ozone concentration is low.

### (Example of Claim 2 of the Present Invention)

In the above-mentioned example, when the residual ozone concentration in the raw water before coagulation was 0. 5 mg/L or more, the amount of PAC1 to be injected was set constant at 3.0 mg-Al/L. However, in example of the invention of claim 2 to be shown below, the amount of PACl to be injected was changed according to the amount of the ozone to be introduced as shown in Table 3 while controlling the amount of the ozone to be injected so that the residual ozone concentration in the raw water before coagulation was kept at 0. 5 mg/L. In this case, the interval for chemical cleaning was 90 days and the membrane-filtration was stably operated. On the other hand, in the case of Table 4 in which the amount of PACl to be injected was set constant at 3.0 mg-Al/L, it was confirmed that when the amount of the ozone to be introduced was small, the interval for chemical cleaning was short, PACl was wasted, and the membrane surface was easily fouled.

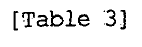

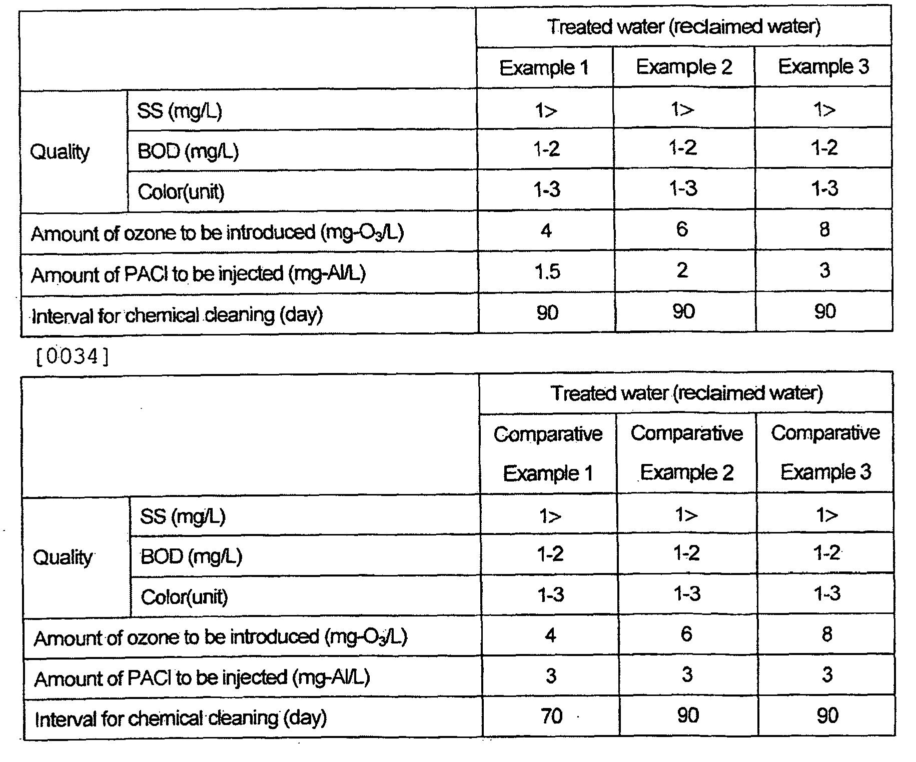

## Claims

1. A process for producing reclaimed water comprising:
bringing ozone into contact with raw water to enhance coagulability of a solid matter contained in the raw water;
injecting a coagulant into the raw water to coagulate the solid matter; and
membrane-filtering the coagulated solid matter,
wherein a residual ozone concentration in the raw water before a separation membrane is measured; ozone is injected from an ozone generator so that the residual ozone concentration in the raw water before the separation membrane is in a given range; and an amount of the coagulant to be injected is increased when an ozone demand exceeds capacity of an ozone generator due to deterioration in quality of the raw water and the residual ozone concentration falls below a given value.

2. The process for producing reclaimed water according to claim 1, wherein in a region where the ozone demand does not exceed the capacity of the ozone generator, an amount of the coagulant to be added is increased or decreased according to an amount of the ozone to be introduced or an amount of the ozone to be consumed.

3. The process for producing reclaimed water according to claim 1, wherein the raw water is wastewater containing organic matters.

4. The process for producing reclaimed water according to claim 1, wherein the amount of the ozone to be injected is set so that the residual ozone concentration in the raw water before the separation membrane is within a range from 0.01 to 2.0 mg/L.

5. The process for producing reclaimed water according to claim 1, wherein PACl, aluminum sulfate, ferric chloride or PSI is used as the coagulant.

6. The process for producing reclaimed water according to claim 1, wherein the membrane-filtering is carried out using an MF membrane or a UF membrane.

## Patentansprüche

1. Verfahren für die Herstellung von regeneriertem Wasser, umfassend:
in Kontakt Bringen von Ozon mit Rohwasser, um die Koagulationsfähigkeit eines in dem Rohwasser enthaltenden festen Materials zu erhöhen;
Injizieren eines Koagulationsmittels in das Rohwasser, um das feste Material zu koagulieren; und
Membranfiltrieren des koagulierten festen Materials,
wobei eine restliche Ozonkonzentration in dem Rohwasser vor einer Abtrennungsmembran gemessen wird; Ozon aus einem Ozongenerator so injiziert wird, dass die restliche Ozonkonzentration in dem Rohwasser vor der Abtrennungsmembran in einem gegebenen Bereich ist; und eine Menge des zu injizierenden Koagulationsmittels erhöht wird, wenn ein Ozonbedarf die Kapazität eines Ozongenerators aufgrund der Verschlechterung in der Qualität des Rohwassers übersteigt und die restliche Ozonkonzentration unter einen gegebenen Wert fällt.

2. Verfahren für die Herstellung von regeneriertem Wasser gemäß Anspruch 1, wobei in einem Bereich, in dem der Ozonbedarf nicht die Kapazität des Ozongenerators übersteigt, eine Menge des zuzugebenden Koagulationsmittels gemäß einer Menge des einzubringenden Ozons oder einer Menge des zu konsumierenden Ozons erhöht oder verringert wird.

3. Verfahren für die Herstellung von regeneriertem Wasser gemäß Anspruch 1, wobei das Rohwasser Abwasser ist, das organische Materialien enthält.

4. Verfahren für die Herstellung von regeneriertem Wasser gemäß Anspruch 1, wobei die Menge des zu injizierenden Ozons so eingestellt wird, dass die restliche Ozonkonzentration in dem Rohwasser vor der Abtrennungsmembran in einem Bereich von 0,01 bis 2,0 mg/l ist.

5. Verfahren für die Herstellung von regeneriertem Wasser gemäß Anspruch 1, wobei PACl, Aluminiumsulfat, Eisen(III)-chlorid oder PSI als das Koagulationsmittel verwendet wird.

6. Verfahren für die Herstellung von regeneriertem Wasser nach Anspruch 1, wobei das Membranfiltrieren unter Verwendung einer MF-Membran oder einer UF-Membran durchgeführt wird.

## Revendications

1. Procédé de production d'eau recyclée comprenant de :
mettre de l'ozone en contact avec de l'eau brute pour accroître la coagulabilité d'une matière solide contenue dans l'eau brute ;
injecter un coagulant dans l'eau brute pour coaguler la matière solide ; et
filtrer par membrane la matière solide coagulée,
dans lequel une concentration en ozone résiduelle dans l'eau brute avant une membrane de séparation est mesurée ; l'ozone est injecté depuis un générateur d'ozone de sorte que la concentration en ozone résiduelle dans l'eau brute avant la membrane de séparation est dans une certaine plage ; et une quantité du coagulant à injecter est augmentée quand une demande en ozone excède une capacité d'un générateur d'ozone en raison d'une détérioration de qualité de l'eau brute et la concentration en ozone résiduelle tombe en dessous d'une valeur déterminée.

2. Procédé de production d'eau recyclée selon la revendication 1, dans lequel dans une région où la demande en ozone n'excède pas la capacité du générateur d'ozone, une quantité du coagulant à ajouter est augmentée ou diminuée selon une quantité de l'ozone à introduire ou une quantité de l'ozone à consommer.

3. Procédé de production d'eau recyclée selon la revendication 1, dans lequel l'eau brute est des eaux usées contenant des matières organiques.

4. Procédé de production d'eau recyclée selon la revendication 1, dans lequel la quantité de l'ozone à injecter est réglée afin que la concentration en ozone résiduelle dans l'eau brute avant la membrane de séparation est dans une plage allant de 0,01 à 2,0 mg/L.

5. Procédé de production d'eau recyclée selon la revendication 1, dans lequel du chlorure de polyaluminium, du sulfate d'aluminium, du chlorure ferrique ou du polysulfate ferrique est utilisé en tant que coagulant.

6. Procédé de production d'eau recyclée selon la revendication 1, dans lequel la filtration par membrane est effectuée au moyen d'une membrane MF ou d'une membrane UF.
